(19) **Europäisches Patentamt / European Patent Office / Office européen des brevets**

(11) **EP 4 766 001 A1**

(12) **EUROPEAN PATENT APPLICATION**
published in accordance with Art. 153(4) EPC

(43) Date of publication:
24.06.2026 Bulletin 2026/26

(21) Application number: 24861812.6

(22) Date of filing: 19.08.2024

(51) International Patent Classification (IPC):
H04W 74/08 (2024.01)   H04W 56/00 (2009.01)

(52) Cooperative Patent Classification (CPC):
H04W 56/00; H04W 74/08; H04W 74/0833;
H04W 76/27

(86) International application number:
PCT/CN2024/113146

(87) International publication number:
WO 2025/050968 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.09.2023 CN 202311142426

(71) Applicant: HUAWEI TECHNOLOGIES CO., LTD.
Shenzhen 518129 (CN)

(72) Inventors:
• ZHENG, Haina
Shenzhen, Guangdong 518129 (CN)
• YAO, Chuting
Shenzhen, Guangdong 518129 (CN)
• XUE, Lixia
Shenzhen, Guangdong 518129 (CN)
• FAN, Liangliang
Shenzhen, Guangdong 518129 (CN)
• XU, Haibo
Shenzhen, Guangdong 518129 (CN)

(74) Representative: Thun, Clemens
Mitscherlich PartmbB
Karlstraße 7
80333 München (DE)

(54) **RANDOM ACCESS METHOD AND COMMUNICATION APPARATUS**

(57) This application provides a random access method and a communication apparatus, which may be applied to a communication system, to avoid using a GNSS capability of a terminal apparatus to perform random access. Therefore, a random access success rate can be improved when a GNSS capable terminal apparatus performs random access. The method includes: A terminal apparatus receives first indication information from a network device. The first indication information indicates a first correspondence between a first service area of the network device and at least one first timing advance. The first service area is a service area in which the terminal apparatus is located. In this way, the terminal apparatus can send a message 1 to the network device based on the at least one first timing advance, to perform random access.

| Terminal apparatus | Network device |
|---|---|
| S501: First indication information, indicating a first correspondence between a first service area of the network device and at least one first timing advance | |
| S502: Send a message 1 based on the at least one first timing advance | |
| S503: Message 2 | |
| S504: Message 3 | |
| S505: Message 4 | |

FIG. 5

**Description**

This application claims priority to Chinese Patent Application No. 202311142426.6, filed with the China National Intellectual Property Administration on September 5, 2023 and entitled "RANDOM ACCESS METHOD AND COMMUNICATION APPARATUS", which is incorporated herein by reference in its entirety.

## TECHNICAL FIELD

This application relates to the field of communication technologies, and in particular, to a random access method and a communication apparatus.

## BACKGROUND

In a non-terrestrial network (non-terrestrial network, NTN), a network device may indicate a position of a reference point to a terminal apparatus, and the network device may further indicate ephemeris information of a satellite to the terminal apparatus. The terminal apparatus determines a position of the terminal apparatus based on a global navigation satellite system (global navigation satellite system, GNSS) capability, and determines a timing advance based on the position of the terminal apparatus and the position of the reference point. In a procedure in which the terminal apparatus performs random access, the terminal apparatus may send a message 1 to the network device based on the timing advance, to perform random access. However, when the terminal apparatus has no GNSS capability, or the terminal apparatus cannot determine the timing advance based on the position of the terminal apparatus, a success rate of random access is reduced. Therefore, a method is urgently needed to resolve the problem.

## SUMMARY

Embodiments of this application provide a random access method and a communication apparatus, to improve a random access success rate when a non-GNSS capable terminal apparatus performs random access, or when a terminal apparatus cannot determine a timing advance based on a position of the terminal apparatus.

To achieve the foregoing objective, this application uses the following technical solutions.

According to a first aspect, a random access method is provided. Optionally, the method may be performed by a terminal device, an apparatus (for example, a processor, a chip, or a chip system) in a terminal device, or a logical module or software that can implement all or some functions of a terminal device. The following uses a terminal apparatus as an example for description. The random access method includes: The terminal apparatus receives first indication information from a network device. The first indication information indicates a first correspondence between a first service area of the network device and at least one first timing advance. The first service area is a service area in which the terminal apparatus is located. The terminal apparatus sends the message 1 to the network device based on the at least one first timing advance. The message 1 is used for random access.

Based on the random access method provided in the first aspect, the terminal apparatus may obtain, from the network device, at least one first timing advance in the first service area in which the terminal apparatus is located, and send the message 1 based on the at least one first timing advance, to implement time pre-compensation for the message 1, so that on a network device side, the message 1 sent by the terminal apparatus may be aligned with a message 1 sent by another terminal apparatus. In this way, a random access success rate can be improved when a non-GNSS capable terminal apparatus performs random access.

In a possible design solution, the at least one first timing advance is correlated with at least one distance. The at least one distance is a distance between at least one first position in the first service area and the network device. In this way, the at least one first timing advance can match the network device and the at least one first position in the first service area, to further improve the random access success rate.

Optionally, one of the at least one first position may be a position that is farthest from the network device and that is in the first service area, a position that is closest to the network device and that is in the first service area, or a central position of the first service area.

In a possible design solution, the first indication information may further indicate a second correspondence between different global navigation satellite system GNSS capabilities and cyclic prefix CP lengths of a random access preamble. The message 1 includes a random access preamble, and a CP length of the random access preamble in the message 1 is determined based on a GNSS capability of the terminal apparatus and the second correspondence. In this way, the cyclic prefix length of the random access preamble used by the terminal apparatus can match the GNSS capability of the terminal apparatus, so that when the terminal apparatus has no GNSS capability, a success rate of performing random access by the terminal apparatus to the network device can be further improved based on the at least one first timing advance indicated by the network device.

Optionally, in the second correspondence, a CP length of a random access preamble corresponding to non-GNSS capable is greater than a CP length of a random access preamble corresponding to GNSS capable. In this way, a CP length of a random access preamble used by a GNSS capable terminal apparatus can be greater than a CP length of a random access preamble used by a GNSS capable terminal apparatus. Therefore, when a range of the first service area is large, random access preambles of terminal apparatuses in the first service area can still be aligned on the network device side, to improve the random access success rate.

In a possible design solution, the method provided in the first aspect may further include: The terminal apparatus receives a message 2 from the network device. The message 2 indicates a time-frequency resource carrying a message 3. The terminal apparatus sends the message 3 to the network device based on the time-frequency resource indicated by the message 2. The message 3 includes identification information of the terminal apparatus. The terminal apparatus receives a message 4 from the network device. The message 4 indicates that contention resolution of the terminal apparatus succeeds. In this way, a random access procedure can be completed.

Optionally, the first indication information may further indicate a correspondence between different GNSS capabilities and time-frequency resource sets used for random access. The message 2 includes second indication information, and the second indication information indicates the time-frequency resource carrying the message 3. The time-frequency resource carrying the message 3 is a time-frequency resource in a time-frequency resource set that is used for random access and that corresponds to the GNSS capability of the terminal apparatus. In this way, the correspondence between different GNSS capabilities and time-frequency resource sets used for random access may be indicated based on the first indication information, to determine the time-frequency resource carrying the message 3 from a time-frequency resource set that is used for random access and that corresponds to non-GNSS capable.

Optionally, that the terminal apparatus receives the message 2 from the network device may include: The terminal apparatus receives the message 2 from the network device after a first moment. A time length between an end moment of sending the message 1 by the terminal apparatus and the first moment is a first time length. The first time length is twice the first timing advance. In other words, after sending the message 1, the terminal apparatus may wait for twice the first timing advance before opening a monitoring window to monitor the message 2. In this way, time for monitoring the message 2 can be reduced, to reduce power consumption of the terminal apparatus.

Optionally, that the terminal apparatus receives the message 4 from the network device may include: The terminal apparatus receives the message 4 from the network device after a second moment. A time length between an end moment of sending the message 3 by the terminal apparatus and the second moment is a second time length. The second time length is twice the first timing advance. In other words, after sending the message 3, the terminal apparatus may wait for twice the first timing advance before opening a monitoring window to monitor the message 4. In this way, time for monitoring the message 4 can be reduced, to reduce power consumption of the terminal apparatus.

In a possible design solution, the terminal apparatus is a non-GNSS capable terminal apparatus, and the network device is a satellite.

According to a second aspect, a random access method is provided. Optionally, the method may be performed by a network device, an apparatus (for example, a processor, a chip, or a chip system) in a network device, or a logical module or software that can implement all or some functions of a network device. The random access method includes: The network device sends first indication information to a terminal apparatus. The first indication information indicates a first correspondence between a first service area of the network device and at least one first timing advance. The first service area is a service area in which the terminal apparatus is located. The network device receives a message 1 from the terminal apparatus. The message 1 is sent by the terminal apparatus based on the at least one first timing advance, and the message 1 is used for random access.

Based on the random access method provided in the second aspect, the network device may configure, for the terminal apparatus, at least one first timing advance corresponding to the first service area in which the terminal apparatus is located. In this way, the terminal apparatus can send the message 1 based on the at least one first timing advance, to implement time pre-compensation for the message 1, so that the message 1 can be aligned with a message 1 of another terminal apparatus on a network device side, thereby improving a random access success rate.

In a possible design solution, the at least one first timing advance is correlated with at least one distance. The at least one distance is a distance between at least one first position in the first service area and the network device. In this way, the at least one first timing advance can match the network device and the at least one first position in the first service area, to further improve the random access success rate.

Optionally, one of the at least one first position may be a position that is farthest from the network device and that is in the first service area, a position that is closest to the network device and that is in the first service area, or a central position of the first service area.

In a possible design solution, the first indication information may further indicate a second correspondence between different global navigation satellite system GNSS capabilities and cyclic prefix CP lengths of a random access preamble. A CP length of a random access preamble in the message 1 is determined based on a GNSS capability of the terminal apparatus and the second correspondence. In this way, the cyclic prefix length of the random access preamble used by the terminal apparatus can match the GNSS capability of the terminal apparatus, so that when the terminal apparatus has no GNSS capability, a success rate of performing random access by the terminal apparatus to the network device can be further improved based on the first timing advance indicated by the network device.

Optionally, in the second correspondence, a CP length of a random access preamble corresponding to non-GNSS capable is greater than a CP length of a random access preamble corresponding to GNSS capable. In this way, a CP length of a random access preamble used by a GNSS capable terminal apparatus can be greater than a CP length of a random access preamble used by a GNSS capable terminal apparatus. Therefore, when a range of the first service area is large, random access preambles of terminal apparatuses in the first service area can still be aligned on the network device side, to improve the random access success rate.

In a possible design solution, that the network device receives the message 1 from the terminal apparatus may include: The network device receives the message 1 from the terminal apparatus in a first time period. A time length of the first time period is correlated with the random access preamble carried in the message 1. In this way, the time length in which the network device receives the message 1 can match a cyclic shift value of the random access preamble, so that a time length for receiving a message matches a range of the first service area. Therefore, a detection success rate of the message 1 is improved, to improve the random access success rate.

Optionally, the time length of the first time period is positively correlated with a cyclic shift value of a preamble sequence of the random access preamble carried in the message 1. In this way, when the range of the first service area is larger, the message 1 may be received in longer time, to improve the detection success rate of the message 1, and further improve the random access success rate.

In a possible design solution, the method provided in the second aspect may further include: The network device sends a message 2 to the terminal apparatus. The message 2 indicates a time-frequency resource carrying a message 3. The network device receives the message 3 from the terminal apparatus on the time-frequency resource. The message 3 includes identification information of the terminal apparatus. The network device sends a message 4 to the terminal apparatus. The message 4 indicates that contention resolution of the terminal apparatus succeeds. In this way, a random access procedure can be completed.

Optionally, the first indication information may further indicate a correspondence between different GNSS capabilities and time-frequency resource sets used for random access. The message 2 includes second indication information, and the second indication information indicates the time-frequency resource carrying the message 3. The time-frequency resource carrying the message 3 is a time-frequency resource in a time-frequency resource set that is used for random access and that corresponds to the GNSS capability of the terminal apparatus. In this way, the correspondence between different GNSS capabilities and time-frequency resource sets used for random access may be indicated based on the first indication information, to determine the time-frequency resource carrying the message 3 from a time-frequency resource set that is used for random access and that corresponds to non-GNSS capable.

In a possible design solution, the terminal apparatus is a non-GNSS capable terminal apparatus, and the network device is a satellite.

In addition, for technical effects of the random access method according to the second aspect, refer to the technical effects of the random access method according to the first aspect. Details are not described herein again.

According to a third aspect, a communication apparatus is provided. The communication apparatus is configured to perform the random access method according to any implementation of the first aspect or the second aspect.

In this application, the communication apparatus in the third aspect may be the terminal apparatus in the first aspect or the network device in the second aspect, a chip (system) or another part or component that may be disposed in the terminal apparatus or the network device, or an apparatus including the terminal apparatus or the network device.

It should be understood that the communication apparatus in the third aspect includes a corresponding module, unit, or means (means) for implementing the random access method according to either of the first aspect and the second aspect. The module, the unit, or the means may be implemented by hardware, may be implemented by software, or may be implemented by hardware executing corresponding software. The hardware or the software includes one or more modules or units configured to perform functions related to the foregoing random access method.

According to a fourth aspect, a communication apparatus is provided. The communication apparatus includes a processor. The processor is configured to perform the random access method according to any possible implementation of the first aspect or the second aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory and the processor may be integrated together, or may be disposed separately. The memory may be configured to store a computer program and/or data in the random access method according to either of the first aspect and the second aspect.

In this application, the communication apparatus in the fourth aspect may be the terminal apparatus in the first aspect or the network device in the second aspect, a chip (system) or another part or component that may be disposed in the terminal apparatus or the network device, or an apparatus including the terminal apparatus or the network device.

According to a fifth aspect, a communication apparatus is provided. The communication apparatus includes a processor. The processor is coupled to a memory, and the processor is configured to execute a computer program stored in the memory, so that the communication apparatus performs the random access method according to any possible implementation of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this application, the communication apparatus in the fifth aspect may be the terminal apparatus in the first aspect or the network device in the second aspect, a chip (system) or another part or component that may be disposed in the terminal apparatus or the network device, or an apparatus including the terminal apparatus or the network device.

According to a sixth aspect, a communication apparatus is provided, including a processor and a memory. The memory is configured to store a computer program. When the processor executes the computer program, the communication apparatus is enabled to perform the random access method according to any implementation of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus in the sixth aspect may be the terminal apparatus in the first aspect or the network device in the second aspect, a chip (system) or another part or component that may be disposed in the terminal apparatus or the network device, or an apparatus including the terminal apparatus or the network device.

According to a seventh aspect, a communication apparatus is provided, including a processor. The processor is configured to: be coupled to a memory; and perform, after reading a computer program in the memory, based on the computer program, the random access method according to any implementation of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus in the seventh aspect may be the terminal apparatus in the first aspect or the network device in the second aspect, a chip (system) or another part or component that may be disposed in the terminal apparatus or the network device, or an apparatus including the terminal apparatus or the network device.

According to an eighth aspect, a processor is provided. The processor is configured to perform the random access method according to any possible implementation of the first aspect or the second aspect.

According to a ninth aspect, a communication system is provided. The communication system includes one or more terminal apparatuses and one or more network devices.

According to a tenth aspect, a computer-readable storage medium is provided, including a computer program or instructions. When the computer program or the instructions are run on a computer, the computer is enabled to perform the random access method according to any possible implementation of the first aspect or the second aspect.

According to an eleventh aspect, a computer program product is provided, including a computer program or instructions. When the computer program or the instructions are run on a computer, the computer is enabled to perform the random access method according to any possible implementation of the first aspect or the second aspect.

In addition, for technical effects of the communication apparatuses according to the third aspect to the eleventh aspect, refer to the technical effects of the random access method according to the first aspect or the second aspect. Details are not described herein again.

## BRIEF DESCRIPTION OF DRAWINGS

FIG. 1 is a schematic flowchart of initial access according to an embodiment of this application;
FIG. 2 is a schematic flowchart of random access in a terrestrial network according to an embodiment of this application;
FIG. 3 is a schematic flowchart of random access in a non-terrestrial network according to an embodiment of this application;
FIG. 4 is a diagram of an architecture of a communication system according to an embodiment of this application;
FIG. 5 is a schematic flowchart of a random access method according to an embodiment of this application;
FIG. 6 is a schematic flowchart of another random access method according to an embodiment of this application;
FIG. 7 is a schematic flowchart of another random access method according to an embodiment of this application;

FIG. 8 is a schematic flowchart of another random access method according to an embodiment of this application;
FIG. 9 is a diagram of a structure of a communication apparatus according to an embodiment of this application; and
FIG. 10 is a diagram of a structure of another communication apparatus according to an embodiment of this application.

## DESCRIPTION OF EMBODIMENTS

The following first describes technical terms and related technologies in embodiments of this application.

1: A timing advance (timing advance, TA) refers to a parameter used in a mobile communication system to synchronize timeslots between a network device, for example, an access network device, and a terminal apparatus, and is used to ensure that the terminal apparatus sends or receives data at a correct moment, to maintain communication reliability. For example, if the terminal apparatus sends an uplink signal to the network device, the uplink signal is expected to arrive at the network device at a moment T1, and a transmission delay between the terminal apparatus and the network device is TA1, the terminal apparatus may send the uplink signal at a moment (T1-TA1).

2: In a non-terrestrial network (non-terrestrial network, NTN), a service may be provided for a terminal apparatus via a satellite (satellite), an unmanned aerial system (unmanned aerial system, UAS) (including a high altitude platform station (high altitude platform station, HAPS)), or the like. A coverage area of a network device in the non-terrestrial network is larger than a coverage area of a network device in a terrestrial network. For example, the network device in the non-terrestrial network is a satellite. A higher orbit of the satellite indicates a larger coverage area of the satellite.

Satellite running orbits can be classified into a low-earth orbit (low-earth orbit, LEO), a medium-earth orbit (medium-earth orbit, MEO), and a geostationary earth orbit (geostationary earth orbit, GEO) by altitude. An orbital altitude of the LEO ranges from 300 kilometres (kilometre, km) to 2,000 km. An orbital altitude of the MEO ranges from 7,000 km to 25,000 km, and an orbital altitude of the GEO is 35,786 km. A position, relative to the earth, of a satellite running on the GEO is not affected by rotation of the earth. A non-geosynchronous orbit (non-geosynchronous orbit, NGSO) includes a low-earth orbit at an altitude of about 300 km to 1,500 km and a medium-earth orbit at an altitude of about 7,000 km to 25,000 km. The following Table 1 shows a correspondence between orbital altitudes and beams of satellites on different orbits.

Table 1

| Orbital platform (platform) | Orbital altitude range (altitude range) | Beam size (beam footprint size) |
|---|---|---|
| LEO satellite | 300 km to 1,500 km | 100 km to 1,000 km |
| MEO satellite | 7,000 km to 25,000 km | 100 km to 1,000 km |
| GEO satellite | 35,786 km | 200 km to 3,500 km |
| UASS (including an HAPS) | 8 km to 50 km (HAPS: 20 km) | 5 km to 200 km |

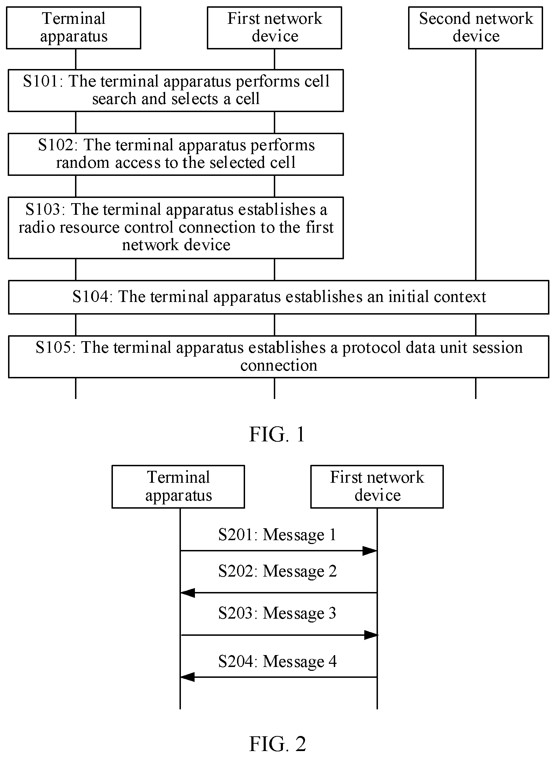

In a cellular network, a terminal apparatus may access a network through an initial access procedure. The initial access procedure performed by the terminal apparatus is shown in FIG. 1. The initial access procedure includes the following steps.

S101: The terminal apparatus performs cell search and selects a cell.

For implementation of S101, refer to principles of cell search and cell selection in a conventional technology. Details are not described herein again.

S102: The terminal apparatus performs random access to the selected cell.

After performing cell selection and camping on the selected cell, the terminal apparatus initiates a random access procedure in the camped cell. The terminal apparatus may obtain, through the random access procedure, uplink synchronization with the cell, to obtain an uplink sending timing advance. In addition, when the terminal apparatus establishes an initial radio link, in other words, when the terminal apparatus switches from an idle (idle) state to a connected (active) state, the terminal apparatus may obtain a user identifier, for example, a cell radio network temporary identifier (cell radio network temporary identifier, C-RNTI), through the random access procedure.

For an implementation principle of S102, refer to the following random access procedure provided in FIG. 2.

S103: The terminal apparatus establishes a radio resource control (radio resource control, RRC) connection (link) to a first network device.

For an implementation principle of S103, refer to a principle of establishing an RRC connection in the conventional technology. Details are not described herein again.

S104: The terminal apparatus establishes an initial context.

The terminal apparatus may interact with the first network device and a second network device, to establish the initial context. The second network device may include a core network element, or a device that implements a function of a core network element.

For an implementation principle of S104, refer to a principle of establishing an initial context in the conventional technology. Details are not described herein again.

S105: The terminal apparatus establishes a protocol data unit (protocol data unit, PDU) session connection.

For an implementation principle of S105, refer to a principle of establishing a PDU session connection in the conventional technology. Details are not described herein again.

In a communication system based on a terrestrial network, the first network device may be a radio access network apparatus. In this case, a random access procedure performed by a terminal apparatus is shown in FIG. 2. The random access procedure shown in FIG. 2 includes the following steps.

S201: The terminal apparatus sends a message 1 to a first network device. Correspondingly, the first network device receives the message 1 from the terminal apparatus.

The message 1 carries a random access (random access, RA) preamble (preamble), and the random access preamble may be used to estimate an uplink time difference between the terminal apparatus and the first network device. In other words, the random access preamble may be used by the terminal apparatus to access the first network device. The message 1 may also be referred to as a message 1 (message 1, Msg1) or a first message.

After sending the message 1, the terminal apparatus may start a first timer, and timing duration of the first timer may be timing duration #1. For example, the timing duration #1 may be duration of ra-ResponseWindow.

S202: The first network device sends a message 2 to the terminal apparatus. Correspondingly, the terminal apparatus receives the message 2 from the first network device.

The message 2 includes the uplink time difference between the terminal apparatus and the first network device. The uplink time difference is determined by the first network device based on the received random access preamble.

The message 2 may be carried on a physical downlink shared channel (physical downlink shared channel, PDSCH). It may be understood that RARs respectively corresponding to a plurality of terminal apparatuses may be carried on a same PDSCH. The message 2 may also be referred to as a random access response (random access response, RAR), a message 2 (message 2, Msg2), or a second message.

After receiving the message 1, the terminal apparatus may monitor and receive the message 2 from the network device within the timing duration #1 since start of the first timer.

After receiving the message 2 from the first network device, the terminal apparatus may disable the first timer, in other words, stop the first timer. In this way, monitoring time of the terminal apparatus can be reduced, to reduce overheads.

S203: The terminal apparatus sends a message 3 to the first network device based on the message 2. Correspondingly, the first network device receives the message 3 from the terminal apparatus.

The message 3 may also be referred to as a message 3 (message 3, Msg3) or a third message.

It may be understood that the terminal apparatus may start a second timer after completing sending the message 3, and timing duration of the second timer may be timing duration #2. For example, the timing duration #2 may be duration of ra-ContentionResolutionTimer.

After receiving the message 3, the first network device may perform the following S204.

S204: The first network device sends a message 4 to the terminal apparatus. Correspondingly, the terminal apparatus receives the message 4 from the first network device.

It may be understood that the terminal apparatus may monitor and receive the message 4 from the first network device within the timing duration #2 since start of the second timer.

After receiving the message 4 from the first network device, the terminal apparatus may disable the second timer, in other words, stop the second timer. In this way, monitoring time of the terminal apparatus can be reduced, to reduce overheads.

After the message 4 is received, the terminal apparatus determines that random access succeeds. In this case, data transmission can be performed between the terminal apparatus and the first network device.

The message 4 may also be referred to as a message 4 (message 4, Msg4), a fourth message, or a contention resolution message.

In the procedure provided in FIG. 2, in the random access procedure performed by a terminal, uplink time-frequency resources in a same cell are orthogonal. Therefore, uplink transmission of different terminals in the same cell does not interfere with each other.

To maintain such uplink orthogonality (uplink orthogonality), when a numerology (Numerology), like a subcarrier spacing type, is given, uplink subframe boundaries in a same cell need to be (approximately) aligned on a first network device side. In other words, non-alignment in signal receiving time should fall within a cyclic prefix (cyclic prefix, CP). To ensure alignment of the signal receiving time on the first network device, a TA mechanism is introduced in the new radio (new radio, NR) standard. A TA is used for uplink transmission of the terminal apparatus, and means that a subframe in which the terminal apparatus sends uplink data needs to be advanced by specific time relative to a corresponding uplink subframe. A specific advance is calculated by a gNodeB based on an RA preamble (random access preamble) sent by UE, and then is notified to the terminal apparatus by using a timing advance command (timing advance command, TAC). The terminal apparatus adjusts a sending moment of an uplink signal based on the received TA, to implement uplink synchronization between the terminal apparatus and the gNodeB.

In a communication system based on a non-terrestrial network, for example, a satellite communication system, a first network device is far away from a terrestrial coverage area, and a delay is large. In addition, a coverage area of the first network device is far larger than a coverage area of a first network device in a terrestrial network, and a cyclic prefix of an existing random access preamble cannot meet an alignment requirement. Consequently, random access of a terminal apparatus fails.

To resolve a problem of random access of the terminal apparatus in the non-terrestrial network, the terminal apparatus may perform time pre-compensation when sending a random access preamble.

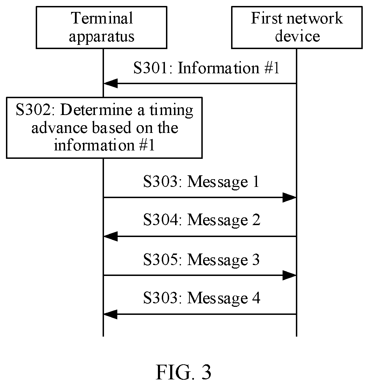

The following uses the communication system in the non-terrestrial network as an example to describe a random access procedure performed by the terminal apparatus in the non-terrestrial network. As shown in FIG. 3, the communication system in the non-terrestrial network includes a terminal apparatus and a first network device. The first network device may be a device having a function of a wireless access apparatus, for example, a satellite or an uncrewed aerial vehicle. The terminal apparatus is communicatively connected to the first network device, and the first network device is communicatively connected to a second network device through a terrestrial gateway. The second network device may include a core network element, or a device that implements a function of a core network element. In the communication system shown in FIG. 3, a random access procedure of the terminal apparatus is shown in FIG. 3. The random access procedure includes the following steps.

S301: The first network device sends information #1 to the terminal apparatus. Correspondingly, the terminal apparatus receives the information #1 from the first network device.

The information #1 indicates a position of a reference point of a link between the terminal apparatus and the terrestrial gateway.

In a possible design solution, the position of the reference point may be a position of a satellite. In this case, the position of the reference point may be determined based on ephemeris information of the satellite. The ephemeris information of the satellite includes one or more of the following: semi-major axis (semi major axis (semi-major axis)), eccentricity (Eccentricity (eccentricity)), orbital inclination angle (Inclination angle at reference time (inclination)), right ascension of ascending node (Longitude of ascending node of orbit plane (right ascension of the ascending node)), argument of perigee (Argument of perigee (argument of periapsis)), mean anomaly (Mean anomaly at reference time (true anomaly and a reference point in time)), and reference time (Ephemeris reference time (the epoch)) of the satellite. It may be understood that the position of the reference point may alternatively be a position on a feeder link or a service link. Details are not described herein.

It may be understood that the information #1 may be carried in a broadcast message.

S302: The terminal apparatus determines a timing advance based on the information #1 and a position of the terminal apparatus.

The terminal apparatus determines the position of the satellite based on the ephemeris information of the satellite in the information #1, and determines the position of the terminal apparatus based on a GNSS of the terminal apparatus. The terminal apparatus determines the timing advance based on the position of the satellite and the position of the terminal apparatus.

For an implementation principle for the terminal apparatus to determine the timing advance based on the position of the satellite and the position of the terminal apparatus, refer to the conventional technology. Details are not described herein again.

S303: The terminal apparatus sends a message 1 to the first network device based on the timing advance. Correspondingly, the first network device receives the message 1 from the terminal apparatus.

For an implementation principle of the message 1, refer to the related descriptions in S201. Details are not described herein again.

S304: The first network device sends a message 2 to the terminal apparatus. Correspondingly, the terminal apparatus receives the message 2 from the first network device.

For an implementation principle of the message 2, refer to the related descriptions of the message 2 in S202. For an implementation principle of S304, refer to the related descriptions in S202. Details are not described herein again.

S305: The terminal apparatus sends a message 3 to the first network device. Correspondingly, the first network device receives the message 3 from the terminal apparatus.

For an implementation principle of the message 3, refer to the related descriptions in S203.

For the implementation principle of the message 2, refer to the related descriptions of the message 2 in S203. For an implementation principle of S305, refer to the related descriptions in S203. Details are not described herein again.

S306: The first network device sends a message 4 to the terminal apparatus. Correspondingly, the terminal apparatus receives the message 4 from the first network device.

For an implementation principle of the message 4, refer to the related descriptions in S204. For an implementation principle of S306, refer to the related descriptions in S204. Details are not described herein again.

However, in the non-terrestrial network, when the terminal apparatus does not have a GNSS capability, the terminal apparatus cannot obtain the position of the terminal apparatus. Consequently, the terminal apparatus cannot accurately calculate a specific timing advance based on a distance between the terminal apparatus and the first network device, for example, a satellite, and cannot implement pre-compensation using the timing advance. Because a difference between distances between terminal apparatuses and the first network device is large, a delay difference of message 1s arriving at the first network device is large. In this case, alignment cannot be performed in a preset time window, and consequently, random access fails.

The following describes technical solutions of this application with reference to accompanying drawings.

The technical solutions of this application may be applied to a non-terrestrial network (non-terrestrial network, NTN) system like a satellite communication system, a high altitude platform (high altitude platform station, HAPS) communication system, or an uncrewed aerial vehicle, for example, an integrated communication and navigation (integrated communication and navigation, IcaN) system, a global navigation satellite system (global navigation satellite system, GNSS), and an ultra-dense low-orbit satellite communication system. The satellite communication system may be integrated with a conventional mobile communication system. For example, the mobile communication system may be a 4th generation (4th generation, 4G) communication system (for example, a long-term evolution (long-term evolution, LTE) system), a worldwide interoperability for microwave access (worldwide interoperability for microwave access, WiMAX) communication system, a 5th generation (5th generation, 5G) communication system (for example, a new radio (new radio, NR) system), or a future mobile communication system, for example, a 6th generation (6th generation, 6G) mobile communication system.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long-term evolution (long-term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or descriptions. Any embodiment or design scheme described as an "example" in this application should not be explained as being more preferred or having more advantages than another embodiment or design scheme. To be precise, the term "example" is for presenting a concept in a specific manner.

In the specification and claims of this application, the terms "first", "second", and the like are intended to distinguish between similar objects but do not necessarily indicate a specific order or sequence. It should be understood that the data termed in such a way are interchangeable in proper circumstances so that embodiments of this application described herein can be implemented in another order than the order illustrated or described herein. In addition, terms "include" and "have" and any other variants are intended to cover non-exclusive inclusion. For example, a process, method, system, product, or device that includes a list of steps or units is not necessarily limited to those expressly listed steps or units, but may include another step or unit not expressly listed or inherent to such a process, method, product, or device.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. A character "/" generally represents an "or" relationship between the associated objects. "At least one of the following items (pieces)" or a similar expression thereof represents any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In embodiments of this application, sometimes a subscript, for example, $W_1$, may be written incorrectly in a non-subscript form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may understand that: With the evolution of the network architecture and the emergence of new service scenarios, the technical solutions provided in embodiments of this application are also applicable to similar technical problems.

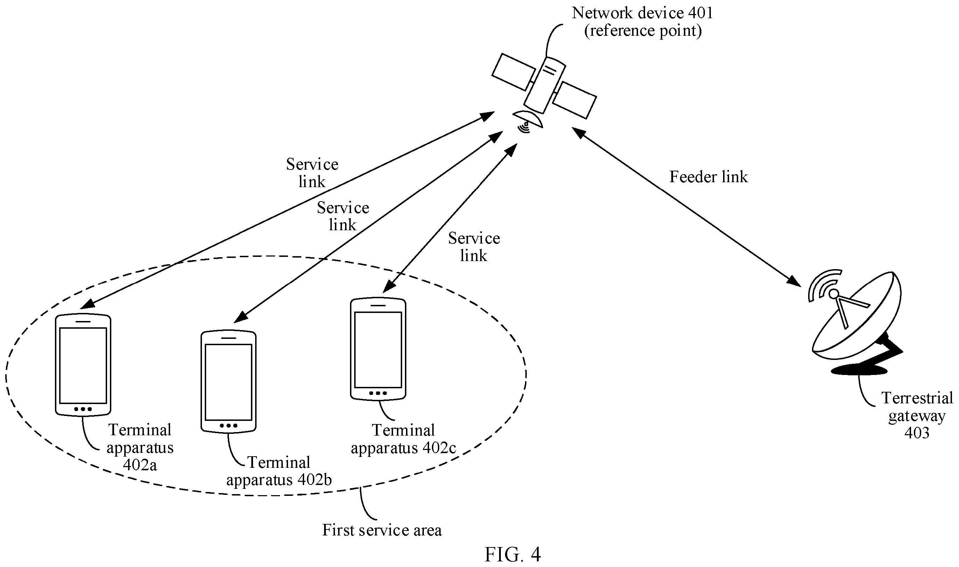

For ease of understanding of embodiments of this application, a communication system shown in FIG. 4 is first used as an example to describe in detail a communication system applicable to embodiments of this application. For example, FIG. 4 is a diagram of an architecture of a communication system to which a random access method provided in an embodiment of this application is applicable.

As shown in FIG. 4, the communication system includes a network device 401 and terminal apparatuses (a terminal apparatus 402a to a terminal apparatus 402c).

Information exchange may be performed between the network device 401 and the terminal apparatuses (the terminal apparatus 402a to the terminal apparatus 402c).

It may be understood that the communication system shown in FIG. 4 may further include a terrestrial gateway 403. The network device 401 may exchange information with the terrestrial gateway 403.

The network device is a device that is located on a network side of the communication system and that has a wireless transceiver function, or a chip or a chip system that can be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission reception point, TRP; or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in a 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The terrestrial gateway is a terminal that accesses the communication system and that has a wireless transceiver function, or a chip or a chip system that can be disposed in the terminal. The terminal apparatus may also be referred to as an access terminal, a subscriber unit, a subscriber station, a mobile station, a remote station, a remote terminal, a mobile device, a user terminal, a terminal, a wireless communication device, a user agent, or a user apparatus. The terminal apparatus in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal apparatus in this application may alternatively be a vehicle-mounted module, a vehicle-mounted assembly, a vehicle-mounted component, a vehicle-mounted chip, or a vehicle-mounted unit that is built inside a vehicle as one or more components or units. The vehicle uses the vehicle-mounted module, the vehicle-mounted assembly, the vehicle-mounted component, the vehicle-mounted chip, or the vehicle-mounted unit that is built inside the vehicle, to implement the random access method provided in this application.

It should be noted that the random access method provided in embodiments of this application is applicable to the terminal apparatus and the network device shown in FIG. 4. For a specific implementation, refer to the following method embodiments. Details are not described herein.

It should be noted that, the solutions in embodiments of this application may also be applied to another communication system, and a corresponding name may also be replaced with a name of a corresponding function in the other communication system.

It should be understood that FIG. 4 is merely a simplified diagram used as an example for ease of understanding. The communication system may further include another network device and/or another terminal apparatus, which are not drawn in FIG. 4.

Based on the communication system shown in FIG. 4, an embodiment of this application provides a random access method. In the random access method, a network device may indicate, to a terminal apparatus by using first indication information, a TA corresponding to a first service area in which the terminal apparatus is located. After obtaining the TA, the terminal apparatus may send a message 1 to the network device based on the TA. Therefore, when a non-GNSS capable terminal apparatus performs random access, a time difference at which messages of different terminal apparatuses in the first service area arrive at a network device side can be reduced, thereby improving a random access success rate.

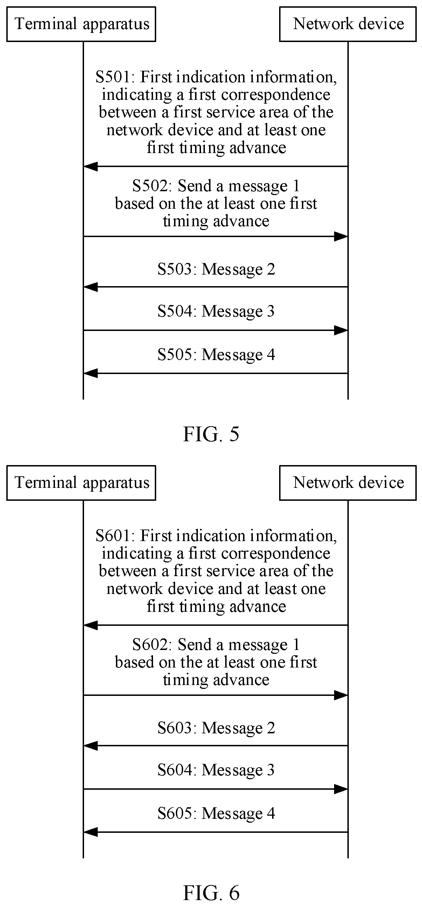

With reference to FIG. 5 to FIG. 8, the following describes in detail the random access method provided in embodiments of this application.

For example, FIG. 5 is a schematic flowchart of a random access method according to an embodiment of this application. The random access method may be applicable to communication between the terminal apparatus and the network device shown in FIG. 4.

As shown in FIG. 5, the random access method includes the following steps.

S501: A network device sends first indication information to a terminal apparatus. Correspondingly, the terminal apparatus receives the first indication information from the network device.

The first indication information indicates a first correspondence between a first service area of the network device and at least one first timing advance. The first service area is a service area in which the terminal apparatus is located.

In a possible design solution, the at least one first timing advance is correlated with at least one distance. The at least one distance is a distance between at least one first position in the first service area and the network device.

Optionally, the first indication information may include the at least one distance. In this case, the first indication information may indicate the at least one first timing advance by indicating the at least one distance.

Alternatively, optionally, the first indication information may include the at least one first position. In this case, the first indication information may indicate the first timing advance by indicating the at least one first position.

In this case, the terminal apparatus may determine the first timing advance based on each of the at least one first position and a position of the network device. The position of the network device may be determined by the terminal apparatus based on running information of the network device. For example, when the network device is a satellite, the running information may be ephemeris information. For the ephemeris information, refer to the related descriptions in S301. Details are not described herein again.

Alternatively, optionally, the first indication information may include at least one parameter corresponding to the at least one first timing advance. In other words, the first indication information may indicate the first timing advance by using the at least one parameter corresponding to the at least one first timing advance. It may be understood that the at least one parameter may be correlated with the at least one distance.

Optionally, one of the at least one first position may be a position that is farthest from the network device and that is in the first service area, a position that is closest to the network device and that is in the first service area, or a central position of the first service area. The at least one first timing advance may include one or more first timing advances. The at least one distance may include one or more distances. Each of the at least one first timing advance may be determined based on one distance or two distances in the at least one distance. Distances used to determine different first timing advances are different.

For example, each of the at least one first timing advance may be a round-trip delay between a first position corresponding to the first timing advance and a reference point.

For ease of understanding, the following provides descriptions with reference to FIG. 4. It is assumed that the first service area is shown in FIG. 4. The position that is farthest from the network device and that is in the first service area is a position P1, the position that is closest to the network device and that is in the first service area is P2, and the central position of the first service area is P3. In this case, one of the at least one first position may be one of the positions P1 to P3. For example, if one of the at least one first position is the position P1, the first timing advance may include a round-trip delay between the position P1 and the reference point.

For another example, the at least one first position may include the positions P1 and P2. In this case, the at least one first timing advance may include a round-trip delay between the position P1 and the reference point, and a round-trip delay between the position P2 and the reference point.

Herein, one of the at least one first position is merely used as an example. During actual implementation, the first position in the at least one first position may be any other possible position in the first service area. Details are not described herein again.

It should be understood that a quantity of the at least one first position may be the same as a quantity of the at least one distance. In addition, when there are a plurality of first positions, each of the at least one first position is different.

It may be understood that the first indication information may indicate at least one first timing advance corresponding to each of a plurality of service areas of the network device. The first service area may be one of the plurality of service areas. It is assumed that each service area corresponds to one first timing advance, and the service area and the first timing advance are shown in Table 2. It is assumed that the plurality of service areas of the network device include a service area 1 to a service area n, and first timing advances sequentially corresponding to the service area 1 to the service area n are respectively a timing advance 1 to a first timing advance n.

Table 2

| Service area | Timing advance |
|---|---|
| Service area 1 | First timing advance 1 |

(continued)

| Service area | Timing advance |
|---|---|
| ... | ... |
| Service area n | First timing advance n |

It should be understood that each of the plurality of service areas of the network device corresponds to one beam or one cell (cell). In other words, each of the plurality of service areas of the network device is a coverage area of one beam (beam) or one cell. In other words, in the first indication information, each of the plurality of service areas of the network device may be represented by using an identifier of a beam or an identifier of a synchronization signal and physical broadcast channel block (synchronization signal and physical broadcast channel block, SSB). Therefore, the terminal apparatus may determine the first service area based on the first correspondence indicated by the first indication information and a beam or a cell that carries the first indication information. The terminal apparatus may determine, from a broadcast message like a system information block (system information block, SIB), the beam or the cell that carries the first indication information. In other words, an identifier of the beam or the cell that carries the first indication information may be carried in the broadcast message.

It may be understood that the central position of the first service area may also be referred to as a central position of a beam or a cell corresponding to the first service area. In some possible design solutions, the central position of the first service area may be a position of a geometric center of the first service area.

In this way, the at least one first timing advance can match the network device and the at least one first position in the first service area, to further improve a random access success rate.

Optionally, the first indication information may further indicate a second correspondence between different GNSS capabilities and CP lengths of random access preambles.

In this embodiment of this application, different GNSS capabilities refer to GNSS capability statuses of different terminal apparatuses, and may include GNSS capable and non-GNSS capable. GNSS capable means that the terminal apparatus has a GNSS capability, and non-GNSS capable means that the terminal apparatus has no GNSS capability. The second correspondence is shown in the following Table 3. A CP length, of a random access preamble, corresponding to GNSS capable is a first CP length, and a CP length, of a random access preamble, corresponding to non-GNSS capable is a second CP length. In the second correspondence, the CP length, of the random access preamble, corresponding to non-GNSS capable is greater than the CP length, of the random access preamble, corresponding to GNSS capable. That is, the first CP length is less than or equal to the second CP length. The CP length corresponding to GNSS capable is a CP length of a random access preamble used by a GNSS capable terminal apparatus for random access. The CP length corresponding to non-GNSS capable is a CP length of a random access preamble used by a non-GNSS capable terminal apparatus for random access.

Table 3

| GNSS capability status of a terminal apparatus | CP length |
|---|---|
| GNSS capable | First CP length |
| Non-GNSS capable | Second CP length |

In this way, the CP length of the random access preamble used by the GNSS capable terminal apparatus can be greater than the CP length of the random access preamble used by the GNSS capable terminal apparatus. Therefore, when a range of the first service area is large, random access preambles of terminal apparatuses in the first service area can still be aligned on a network device side, to improve the random access success rate.

It may be understood that, in this embodiment of this application, the GNSS capable terminal apparatus is a device or a module including the terminal apparatus, for example, a terminal device, with the GNSS capability. The GNSS capable terminal apparatus is a device or a module including the terminal apparatus, for example, a terminal device, without the GNSS capability. The GNSS capability of the terminal apparatus refers to a GNSS capability of a device or a module including the terminal apparatus, for example, a terminal device.

Optionally, the first indication information may further indicate a correspondence between the GNSS capability of the terminal apparatus and a time-frequency resource set used for random access.

Optionally, the first indication information may further indicate the correspondence, namely, a third correspondence, between the GNSS capability of the terminal apparatus and the time-frequency resource set used for random access.

The correspondence between the GNSS capability and the time-frequency resource set used for random access includes a correspondence between the GNSS capable terminal apparatus and a time-frequency resource set used for random access, and a correspondence between the GNSS capable terminal apparatus and a time-frequency resource set used for random access. For example, in the third correspondence, GNSS capable corresponds to a first time-frequency resource set, and non-GNSS capable corresponds to a second time-frequency resource set. For the third correspondence, refer to the following Table 4. The time-frequency resource set corresponding to GNSS capable is a time-frequency resource set used by the GNSS capable terminal apparatus for random access. The time-frequency resource set corresponding to non-GNSS capable is a time-frequency resource set for a random access preamble used by the GNSS capable terminal apparatus for random access.

Table 4

| GNSS capability status of a terminal apparatus | Time-frequency resource set |
|---|---|
| GNSS capable | First time-frequency resource set |
| Non-GNSS capable | Second time-frequency resource set |

Optionally, a time domain position of the time-frequency resource set that is used for random access and that corresponds to the GNSS capable terminal apparatus is located before a time domain position of the time-frequency resource set that is used for random access and that corresponds to the GNSS capable terminal apparatus. In this way, service efficiency of an entire communication system can be improved.

In a possible design solution, the terminal apparatus is a non-GNSS capable terminal apparatus, and the network device is a satellite, an uncrewed aerial vehicle, or the like.

It should be understood that the first indication information may be carried in RRC signaling.

S502: The terminal apparatus sends a message 1 to the network device based on the at least one first timing advance. Correspondingly, the network device receives the message 1 from the terminal apparatus.

The message 1 is used for random access. It should be understood that the message 1 includes a random access preamble.

The random access preamble may be configured by the network device for the terminal apparatus. For example, the network device may include an identifier of the random access preamble in a broadcast message like a master information block (master information block, MIB) or a SIB, and dedicated signaling such as RRC signaling.

The following describes the random access preamble in different cases.

In a possible design solution, when the first indication information further indicates the second correspondence, the CP length of the random access preamble in the message 1 is determined based on the GNSS capability of the terminal apparatus and the second correspondence.

For example, the first CP length and the second CP length are used as an example. If a corresponding terminal apparatus has the GNSS capability, the CP length of the random access preamble in the message 1 is the first CP length. If a corresponding terminal apparatus has no GNSS capability, the CP length of the random access preamble in the message 1 is the second CP length.

In this way, the CP length of the random access preamble used by the terminal apparatus can match the GNSS capability of the terminal apparatus, so that when the terminal apparatus has no GNSS capability, a success rate of performing random access by the terminal apparatus to the network device can be further improved based on the at least one first timing advance indicated by the network device.

The CP length of the random access preamble is correlated with a radius of the cell or the beam corresponding to the first service area. For example, that a radius of the beam corresponding to the first service area is 500 km, an elevation angle of a point that is farthest from the network device and that is in the first service area is 10°, and a corresponding transmission delay every 1 km is 6.7 microseconds (microseconds, $\mu$s) is used as an example. In this case, a CP length $T_{CP}$ of the random access preamble needs to satisfy the following relationship: $T_{CP}=(D02-D01)*6.7$ $\mu$s. D01 is a fourth distance, to be specific, a shortest distance between the service area in which the terminal apparatus is located, and the network device. D02 is a third distance, to be specific, a longest distance between the service area in which the terminal apparatus is located, and the network device. $N_{CP}^{RA}=T_{CP}/T_C=202030k$, where $T_C$ corresponds to a sampling interval at a subcarrier spacing of 480 kilohertz (kilohertz, kHz), and k is equal to 64 and is an auxiliary parameter.

In a possible design solution, the random access preamble carried in the message 1 may be determined based on the conventional technology. In this case, for an implementation principle of the message 1, refer to the related descriptions in S303. Details are not described herein again.

The terminal apparatus sends the message 1 to the network device based on the at least one first timing advance. In other words, the terminal apparatus determines a target timing advance based on the at least one first timing advance, and sends the message 1 to the network device based on the target timing advance.

If the at least one first timing advance includes one first timing advance, the target timing advance is the first timing advance. If the at least one first timing advance includes a plurality of first timing advances, the target timing advance may be one of the plurality of first timing advances, or the target timing advance ranges from a minimum value to a maximum value of the plurality of first timing advances.

In a possible design solution, that the network device receives the message 1 from the terminal apparatus may include: The network device receives the message 1 from the terminal apparatus in a first time period. A time length of the first time period is correlated with the random access preamble carried in the message 1.

In this way, the time length in which the network device receives the message 1 can match a cyclic shift value of the random access preamble, so that a time length for receiving a message matches a range of the first service area. Therefore, a detection success rate of the message 1 is improved, to improve the random access success rate.

Optionally, the time length of the first time period is correlated with a cyclic shift value of a preamble sequence of the random access preamble carried in the message 1, and the cyclic shift (cyclic shift, CS) value of the preamble sequence of the random access preamble carried in the message 1 is determined based on a radius of the first service area. For example, the cyclic shift value CS of the preamble sequence of the random access preamble carried in the message 1 may be calculated according to the following formula:

$$CS=(\pi/6)*R$$

$\pi/6$ represents an angle unit, and R represents a length of the radius of the first service area. It may be understood that the radius of the first service area may be of a length of a radius of a cell whose coverage area is the first service area.

In this way, when the range of the first service area is larger, the message 1 may be received in longer time, to improve the detection success rate of the message 1, and further improve the random access success rate.

In a possible design solution, for an implementation principle of receiving the message 1 from the terminal apparatus by the network device, refer to the related descriptions in S303. Details are not described herein again.

S503: The network device sends a message 2 to the terminal apparatus. Correspondingly, the terminal apparatus receives the message 2 from the network device.

The message 2 indicates a time-frequency resource carrying a message 3.

For an implementation principle of the message 2, refer to the related descriptions in S304. Details are not described herein again. A difference lies in that when the first indication information may further indicate a correspondence between different GNSS capabilities and time-frequency resource sets used for random access, the time-frequency resource carrying the message 3 is a time-frequency resource in a time-frequency resource set that is used for random access and that corresponds to the terminal apparatus. The time-frequency resource set that is used for random access and that corresponds to the terminal apparatus is a time-frequency resource set that is used for random access and that corresponds to a GNSS capability of the corresponding terminal apparatus.

Optionally, when the first indication information further indicates the correspondence between different GNSS capabilities and time-frequency resource sets used for random access, the message 2 includes second indication information, and the second indication information indicates the time-frequency resource carrying the message 3. In other words, the time-frequency resource carrying the message 3 may be carried in the second indication information in the message 2.

Optionally, the second indication information may indicate that the time domain position of the time-frequency resource set that is used for random access and that corresponds to the GNSS capable terminal apparatus is located before the time domain position of the time-frequency resource set that is used for random access and that corresponds to the GNSS capable terminal apparatus. In this way, the service efficiency of the entire communication system can be improved.

The second indication information may indicate the first timing advance. For example, the second indication information may carry an index of the first timing advance, that is, a TAC. That the radius of the beam corresponding to the first service area is 500 km, the elevation angle of the point that is farthest from the network device and that is in the first service area is 10°, and the corresponding transmission delay every 1 km is 6.7 microseconds (microseconds, $\mu$s) is used as an example. In this case, the TAC occupies 14 bits.

In this way, the correspondence between different GNSS capabilities and time-frequency resource sets used for random access may be indicated based on the first indication information, to determine the time-frequency resource carrying the message 3 from the time-frequency resource set that is used for random access and that corresponds to the GNSS capable terminal apparatus.

In a possible design solution, S503 may include: The terminal apparatus receives the message 2 from the network device after a first moment. A time length between an end moment of sending the message 1 by the terminal apparatus and the first moment is a first time length.

The first moment is a moment after the terminal apparatus sends the message 1.

Optionally, the first time length is twice the first timing advance.

In this way, after sending the message 1, the terminal apparatus may wait for the first time length, which is, for example, twice the first timing advance, before opening a monitoring window to monitor the message 2. In this way, time for monitoring the message 2 can be reduced, to reduce power consumption of the terminal apparatus.

It may be understood that, that the first time length is twice the first timing advance is merely used as an example. During actual implementation, the first time length may alternatively be another time length. Details are not described herein again.

In another possible design solution, for an implementation principle of S503, refer to the related descriptions in S304. Details are not described herein again.

S504: The terminal apparatus sends the message 3 to the network device based on the time-frequency resource indicated by the message 2. Correspondingly, the network device receives the message 3 from the terminal apparatus on the time-frequency resource. The message 3 includes identification information of the terminal apparatus.

For an implementation principle of the message 3, refer to the related descriptions in S305. For an implementation principle of S504, refer to the related descriptions in S305. Details are not described herein again.

S505: The network device sends a message 4 to the terminal apparatus. Correspondingly, the terminal apparatus receives the message 4 from the network device.

The message 4 indicates that contention resolution of the terminal apparatus succeeds.

For an implementation principle of the message 4, refer to the related descriptions in S306. Details are not described herein again.

In a possible design solution, S505 may include: The terminal apparatus receives the message 4 from the network device after a second moment. A time length between an end moment of sending the message 3 by the terminal apparatus and the second moment is a second time length.

The second moment is a moment after the end moment of sending the message 3 by the terminal apparatus.

Optionally, the second time length is twice the first timing advance.

In this way, after sending the message 3, the terminal apparatus may wait for the second time length, which is, for example, twice the first timing advance, before opening a monitoring window to monitor the message 4. In this way, time for monitoring the message 4 can be reduced, to reduce power consumption of the terminal apparatus.

It may be understood that, that the second time length is twice the first timing advance is merely used as an example. During actual implementation, the second time length may alternatively be another time length. Details are not described herein again.

In this embodiment of this application, the first time length and the second time length may be configured by using a broadcast message, for example, a SIB.

In another possible design solution, for an implementation principle of S505, refer to the related descriptions in S306. Details are not described herein again.

Based on the random access method provided in FIG. 5, the network device may configure, for the terminal apparatus, the at least one first timing advance corresponding to the first service area in which the terminal apparatus is located. In this way, the terminal apparatus can send the message 1 based on the at least one first timing advance, to implement time pre-compensation for the message 1, so that the message 1 can be aligned with a message 1 of another terminal apparatus on a network device side, thereby improving the random access success rate.

For ease of understanding, the random access method provided in FIG. 5 is separately described below in different scenarios.

In some scenarios, a range of the service area in which the terminal apparatus is located, that is, the first service area, is small. For example, when the radius of the first service area is less than 100 km, an objective of aligning message 1s of terminal apparatuses in the first service area may be implemented based on TAs indicated by the network device. It may be understood that, that the radius of the first service area is less than 100 km is merely used as an example. During actual implementation, the radius of the first service area may alternatively be in another range. Details are not described herein again. In this case, the terminal apparatus may send the message 1 based on a TA indicated by the first indication information, to perform random access. For a random access method in this scenario, refer to FIG. 6.

As shown in FIG. 6, the random access method includes the following steps.

S601: A network device sends first indication information to a terminal apparatus. Correspondingly, the terminal apparatus receives the first indication information from the network device.

The first indication information indicates a first correspondence between a first service area of the network device and at least one first timing advance. The first service area is a service area in which the terminal apparatus is located.

For an implementation principle of the first service area, the at least one first timing advance, and the first correspondence, refer to the related descriptions in S501. Details are not described herein again.

In a possible design solution, the terminal apparatus is a non-GNSS capable terminal apparatus, and the network device is a satellite. It may be understood that the network device may alternatively be an uncrewed aerial vehicle or the like.

Optionally, the first indication information may further indicate a correspondence between different GNSS capabilities and time-frequency resource sets used for random access.

For an implementation principle of the first indication information further indicating the correspondence between different GNSS capabilities and time-frequency resource sets used for random access, refer to the related descriptions in S501. Details are not described herein again.

For an implementation principle of S601, refer to the related descriptions in S501. Details are not described herein again.

S602: The terminal apparatus sends a message 1 to the network device based on the at least one first timing advance. Correspondingly, the network device receives the message 1 from the terminal apparatus.

The message 1 is used for random access. The message 1 carries a random access preamble.

The random access preamble carried in the message 1 may be determined based on the conventional technology. In this case, for an implementation principle of the message 1, refer to the related descriptions in S303. For an implementation principle of sending the message 1 to the network device by the terminal apparatus based on the at least one first timing advance in S602, refer to the related descriptions in S502. For an implementation principle of receiving the message 1 from the terminal apparatus by the network device, refer to the related descriptions in S302. Details are not described herein again.

S603: The network device sends a message 2 to the terminal apparatus. Correspondingly, the terminal apparatus receives the message 2 from the network device.

The message 2 indicates a time-frequency resource carrying a message 3.

For an implementation principle of the message 2, refer to the related descriptions in S503. For an implementation principle of S603, refer to the related descriptions in S503. Details are not described herein again.

S604: The terminal apparatus sends the message 3 to the network device based on the time-frequency resource indicated by the message 2. Correspondingly, the network device receives the message 3 from the terminal apparatus on the time-frequency resource.

The message 3 includes identification information of the terminal apparatus.

For an implementation principle of the message 3, refer to the related descriptions in S504. For an implementation principle of S604, refer to the related descriptions in S504. Details are not described herein again.

S605: The network device sends a message 4 to the terminal apparatus. Correspondingly, the terminal apparatus receives the message 4 from the network device.

For an implementation principle of the message 4, refer to the related descriptions in S505. For an implementation principle of S605, refer to the related descriptions in S505. Details are not described herein again.

For technical effects of the method provided in FIG. 6, refer to the related descriptions in FIG. 5. Details are not described herein again.

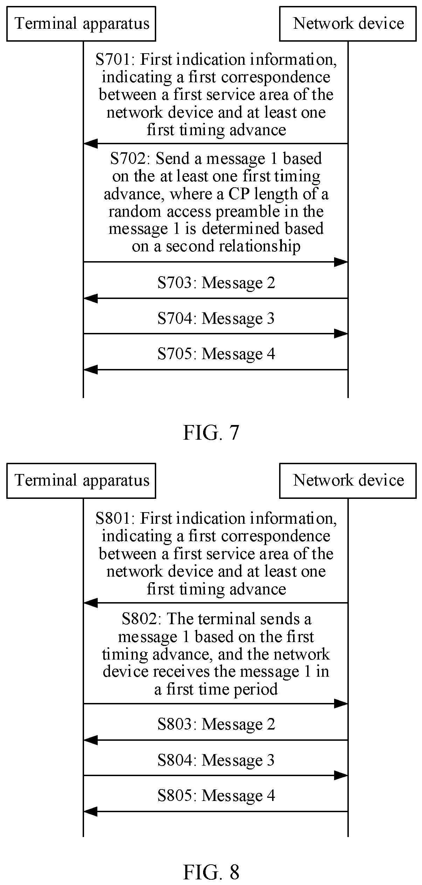

In some other scenarios, a range of the service area in which the terminal apparatus is located, that is, the first service area, is large. For example, when the radius of the first service area is greater than or equal to 100 km, an objective of aligning message 1s of terminal apparatuses in the first service area may be implemented based on TAs indicated by the network device and CP lengths of random access preambles. It may be understood that, that the radius of the first service area is greater than or equal to 100 km is merely used as an example. During actual implementation, the radius of the first service area may alternatively be in another range. Details are not described herein again. In this case, the terminal apparatus may send the message 1 based on the TA indicated by the first indication information and the CP length, of the random access preamble, corresponding to the GNSS capability, to perform random access. For a random access method in this scenario, refer to FIG. 7.

As shown in FIG. 7, the random access method includes the following steps.

S701: A network device sends first indication information to a terminal apparatus. Correspondingly, the terminal apparatus receives the first indication information from the network device.

The first indication information indicates a first correspondence between a first service area of the network device and at least one first timing advance. The first service area is a service area in which the terminal apparatus is located.

In addition, the first indication information further indicates a second correspondence. For an implementation principle of the second correspondence, refer to the related descriptions in S501.

For an implementation principle of the first indication information, refer to the related descriptions in S501. For an implementation principle of S701, refer to the related descriptions in S501. Details are not described herein again.

S702: The terminal apparatus sends a message 1 to the network device based on the at least one first timing advance. Correspondingly, the network device receives the message 1 from the terminal apparatus.

The message 1 is used for random access. The message 1 carries a random access preamble.

A CP length of a random access preamble in the message 1 is determined based on a GNSS capability of the terminal apparatus and the second correspondence.

The CP length of the random access preamble in the message 1 is determined based on the GNSS capability of the terminal apparatus and the second correspondence. For details, refer to the related descriptions in S502. For an implementation principle of S702, refer to the related descriptions in S502. Details are not described herein again.

S703: The network device sends a message 2 to the terminal apparatus. Correspondingly, the terminal apparatus receives the message 2 from the network device.

The message 2 indicates a time-frequency resource carrying a message 3.

For an implementation principle of the message 2, refer to the related descriptions in S503. For an implementation principle of S603, refer to the related descriptions in S503. Details are not described herein again.

S704: The terminal apparatus sends the message 3 to the network device based on the time-frequency resource indicated by the message 2. Correspondingly, the network device receives the message 3 from the terminal apparatus on the time-frequency resource.

The message 3 includes identification information of the terminal apparatus.

For an implementation principle of the message 3, refer to the related descriptions in S504. For an implementation principle of S704, refer to the related descriptions in S504. Details are not described herein again.

S705: The network device sends a message 4 to the terminal apparatus. Correspondingly, the terminal apparatus receives the message 4 from the network device.

For an implementation principle of the message 4, refer to the related descriptions in S505. For an implementation principle of S705, refer to the related descriptions in S505. Details are not described herein again.

For technical effects of the method provided in FIG. 7, refer to the related descriptions in FIG. 5. Details are not described herein again.

In some scenarios, a range of the service area in which the terminal apparatus is located, that is, the first service area, is small. For example, when the radius of the first service area is greater than or equal to 100 km, receiving of a message 1 of the terminal apparatus in the first service area may be implemented based on a TA indicated by the network device and a length of receiving time of the network device. It may be understood that, that the radius of the first service area is greater than or equal to 100 km is merely used as an example. During actual implementation, the radius of the first service area may alternatively be in another range. Details are not described herein again.

In this case, the terminal apparatus may send the message 1 based on a TA indicated by the first indication information, to perform random access. For a random access method in this scenario, refer to FIG. 8.

As shown in FIG. 8, the random access method includes the following steps.

S801: A network device sends first indication information to a terminal apparatus. Correspondingly, the terminal apparatus receives the first indication information from the network device.

The first indication information indicates a first correspondence between a first service area of the network device and at least one first timing advance. The first service area is a service area in which the terminal apparatus is located.

For an implementation principle of the first service area, the at least one first timing advance, and the first correspondence, refer to the related descriptions in S501. Details are not described herein again.

In a possible design solution, the terminal apparatus is a non-GNSS capable terminal apparatus, and the network device is a satellite. It may be understood that the network device may alternatively be an uncrewed aerial vehicle or the like.

Optionally, the first indication information may further indicate a correspondence between different GNSS capabilities and time-frequency resource sets used for random access.

For an implementation principle of the first indication information further indicating the correspondence between different GNSS capabilities and time-frequency resource sets used for random access, refer to the related descriptions in S501. Details are not described herein again.

For an implementation principle of S801, refer to the related descriptions in S501. Details are not described herein again.

S802: The terminal apparatus sends a message 1 to the network device based on the at least one first timing advance. Correspondingly, the network device receives the message 1 from the terminal apparatus.

The message 1 is used for random access. The message 1 carries a random access preamble.

The random access preamble carried in the message 1 may be determined based on the conventional technology. In this case, for an implementation principle of the message 1, refer to the related descriptions in S303. For an implementation principle of sending the message 1 to the network device by the terminal apparatus based on the at least one first timing advance in S802, refer to the related descriptions in S502.

That the network device receives the message 1 from the terminal apparatus may include: The network device receives the message 1 from the terminal apparatus in a first time period. A time length of the first time period is correlated with the random access preamble carried in the message 1.

For an implementation principle of a first time length, refer to the related descriptions in S802. Details are not described herein again.

S803: The network device sends a message 2 to the terminal apparatus. Correspondingly, the terminal apparatus receives the message 2 from the network device.

The message 2 indicates a time-frequency resource carrying a message 3.

For an implementation principle of the message 2, refer to the related descriptions in S503. For an implementation principle of S803, refer to the related descriptions in S503. Details are not described herein again.

S804: The terminal apparatus sends the message 3 to the network device based on the time-frequency resource indicated by the message 2. Correspondingly, the network device receives the message 3 from the terminal apparatus on the time-frequency resource.

The message 3 includes identification information of the terminal apparatus.

For an implementation principle of the message 3, refer to the related descriptions in S504. For an implementation principle of S804, refer to the related descriptions in S504. Details are not described herein again.

S805: The network device sends a message 4 to the terminal apparatus. Correspondingly, the terminal apparatus receives the message 4 from the network device.

For an implementation principle of the message 4, refer to the related descriptions in S505. For an implementation principle of S805, refer to the related descriptions in S505. Details are not described herein again.

For technical effects of the method provided in FIG. 8, refer to the related descriptions in FIG. 5. Details are not described herein again.

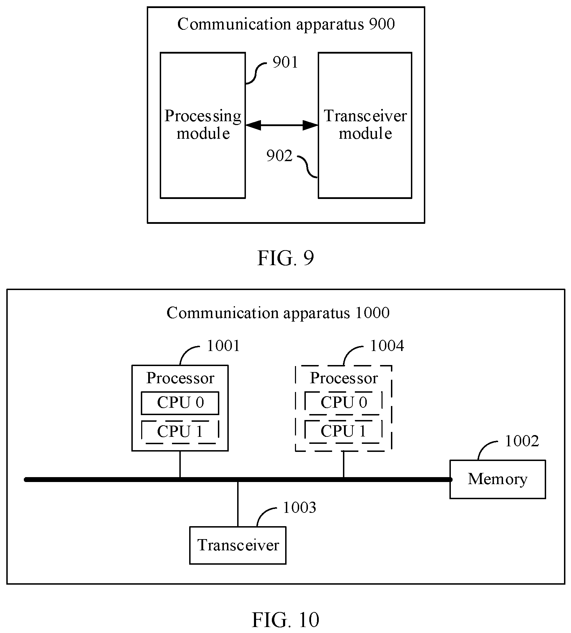

With reference to FIG. 5 to FIG. 8, the foregoing describes in detail the random access method provided in embodiments of this application. The following describes in detail a communication apparatus configured to perform the random access method provided in embodiments of this application with reference to FIG. 9 and FIG. 10.

For example, FIG. 9 is a diagram of a structure of a communication apparatus according to an embodiment of this application. As shown in FIG. 9, the communication apparatus 900 includes a processing module 901 and a transceiver module 902. For ease of description, FIG. 9 shows only main components of the communication apparatus 900.

In some embodiments, the communication apparatus 900 may be used in the communication system shown in FIG. 4, and perform a function of the communication apparatus 900 in the random access method shown in any one of FIG. 5 to FIG. 8.

The transceiver module 902 is configured to receive first indication information from a network device.

The first indication information indicates a first correspondence between a first service area of the network device and at least one first timing advance. The first service area is a service area in which the communication apparatus 900 is located.

The processing module 901 is configured to generate a message 1. The message 1 is used for random access.

The transceiver module 902 is further configured to send the message 1 to the network device based on the at least one first timing advance.

In a possible design solution, the at least one first timing advance is correlated with at least one distance. The at least one distance is a distance between at least one first position in the first service area and the network device.

Optionally, one of the at least one first position may be a position that is farthest from the network device and that is in the first service area, a position that is closest to the network device and that is in the first service area, or a central position of the first service area.

In a possible design solution, the first indication information may further indicate a second correspondence between different GNSS capabilities and CP lengths of random access preambles. The message 1 includes a random access preamble, and a CP length of the random access preamble in the message 1 is determined based on a GNSS capability of the terminal apparatus and the second correspondence.

Optionally, in the second correspondence, a CP length of a random access preamble corresponding to non-GNSS capable is greater than a CP length of a random access preamble corresponding to GNSS capable.

In a possible design solution, the transceiver module 902 is further configured to receive a message 2 from the network device. The message 2 indicates a time-frequency resource carrying a message 3. The transceiver module 902 is further configured to send the message 3 to the network device based on the time-frequency resource indicated by the message 2. The message 3 includes identification information of the communication apparatus 900. The transceiver module 902 is further configured to receive a message 4 from the network device. The message 4 indicates that contention resolution of the communication apparatus 900 succeeds.

Optionally, the first indication information may further indicate a correspondence between different GNSS capabilities and time-frequency resource sets used for random access. The message 2 includes second indication information, and the second indication information indicates the time-frequency resource carrying the message 3. The time-frequency resource carrying the message 3 is a time-frequency resource in a time-frequency resource set that is used for random access and that corresponds to a GNSS capability of the terminal apparatus.

Optionally, the transceiver module 902 is further configured to receive the message 2 from the network device after a first moment. A time length between an end moment of sending the message 1 by the communication apparatus 900 and the first moment is a first time length. The first time length is twice the first timing advance.

Optionally, the transceiver module 902 is further configured to receive a message 4 from the network device after a second moment. A time length between an end moment of sending the message 3 by the communication apparatus 900 and the second moment is a second time length. The second time length is twice the first timing advance.

In a possible design solution, the communication apparatus 900 is a non-GNSS capable terminal apparatus, and the network device is a satellite.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 can perform a function of the terminal apparatus in the random access method shown in any one of FIG. 5 to FIG. 8.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a terminal apparatus, or may be a chip (system) or another component or assembly that can be disposed in the terminal apparatus, or may be a device including the terminal apparatus. This is not limited in this application.

In addition, for technical effects of the communication apparatus 900, refer to the technical effects of the random access method shown in any one of FIG. 5 to FIG. 8. Details are not described herein again.

In some other embodiments, the communication apparatus 900 may be used in the communication system shown in FIG. 4, and perform a function of the network device in the random access method shown in FIG. 5 to FIG. 8.

A processing module 901 is configured to generate first indication information. The first indication information indicates a first correspondence between a first service area of the communication apparatus 900 and at least one first timing advance. The first service area is a service area in which a terminal apparatus is located.

A transceiver module 902 is configured to send the first indication information to the terminal apparatus.

The transceiver module 902 is further configured to receive a message 1 from the terminal apparatus.

The message 1 is sent by the terminal apparatus based on the at least one first timing advance, and the message 1 is used for random access.

In a possible design solution, the at least one first timing advance is correlated with at least one distance. The at least one distance is a distance between at least one first position in the first service area and the communication apparatus 900.

Optionally, one of the at least one first position may be a position that is farthest from the communication apparatus 900 and that is in the first service area, a position that is closest to the communication apparatus 900 and that is in the first service area, or a central position of the first service area.

In a possible design solution, the first indication information may further indicate a second correspondence between different GNSS capabilities and CP lengths of random access preambles. A CP length of a random access preamble in the message 1 is determined based on a GNSS capability of the terminal apparatus and the second correspondence.

Optionally, in the second correspondence, a CP length of a random access preamble corresponding to non-GNSS capable is greater than a CP length of a random access preamble corresponding to GNSS capable.

In a possible design solution, the transceiver module 902 is further configured to receive the message 1 from the terminal apparatus in a first time period. A time length of the first time period is correlated with the random access preamble carried in the message 1.

Optionally, the time length of the first time period is positively correlated with a cyclic shift value of a preamble sequence of the random access preamble carried in the message 1.

In a possible design solution, the transceiver module 902 is further configured to send a message 2 to the terminal apparatus. The message 2 indicates a time-frequency resource carrying a message 3. The transceiver module 902 is further configured to receive the message 3 from the terminal apparatus on the time-frequency resource. The message 3 includes identification information of the terminal apparatus. The transceiver module 902 is further configured to send a message 4 to the terminal apparatus. The message 4 indicates that contention resolution of the terminal apparatus succeeds.

Optionally, the first indication information may further indicate a correspondence between different GNSS capabilities and time-frequency resource sets used for random access. The message 2 includes second indication information, and the second indication information indicates the time-frequency resource carrying the message 3. The time-frequency resource carrying the message 3 is a time-frequency resource in a time-frequency resource set that is used for random access and that corresponds to a GNSS capability of the terminal apparatus.

In a possible design solution, the terminal apparatus is a non-GNSS capable terminal apparatus, and the communication apparatus 900 is a satellite.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 can perform a function of the network device in the random access method shown in any one of FIG. 5 to FIG. 8.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a network device, may be a chip (system) or another component or assembly that can be disposed in the network device, or may be an apparatus including the network device. This is not limited in this application.

In addition, for technical effects of the communication apparatus 900, refer to the technical effects of the random access method shown in any one of FIG. 5 to FIG. 8. Details are not described herein again.

For example, FIG. 10 is a diagram of a structure of another communication apparatus according to an embodiment of this application. The communication apparatus may be a terminal apparatus or a network device, or may be a chip (system) or another component or assembly that can be disposed in the terminal apparatus or the network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, through a communication bus.

The following describes components of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing units, CPUs), may be an application-specific integrated circuit (application-specific integrated circuit, ASIC), or may be one or more integrated circuits configured to implement embodiments of this application, for example, one or more digital signal processors (digital signal processors, DSPs) or one or more field-programmable gate arrays (field-programmable gate arrays, FPGAs).

Optionally, the processor 1001 may run or execute a software program stored in the memory 1002 and invoke data stored in the memory 1002, to perform various functions of the communication apparatus 1000.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU) or a multi-core processor (multi-CPU). The processor herein may refer to one or more devices, circuits, and/or processing cores configured to process data (for example, computer program instructions).

The memory 1002 is configured to store a software program for executing the solutions of this application, and the processor 1001 controls execution of the software program. For specific implementation, refer to the foregoing method embodiments. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another compact disc storage, optical disc storage (including a compressed optical disc, a laser disc, an optical disc, a digital versatile disc, and a Blu-ray disc), a magnetic disk storage medium, or another magnetic storage device, or any other medium that can be used to carry or store expected program code in the form of instructions or a data structure and that can be accessed by a computer, but not limited thereto. The memory 1002 may be integrated with the processor 1001, or may exist independently and is coupled to the processor 1001 through an interface circuit (not shown in FIG. 10) of the communication apparatus 1000. This is not specifically limited in this embodiment of this application.

The transceiver 1003 is configured to communicate with another communication apparatus. For example, the communication apparatus 1000 is a terminal apparatus, and the transceiver 1003 may be configured to communicate with a network device or another terminal apparatus. For another example, the communication apparatus 1000 is a network device, and the transceiver 1003 may be configured to communicate with a terminal apparatus or another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through an interface circuit (not shown in FIG. 10) of the communication apparatus 1000.

This is not specifically limited in this embodiment of this application.

It should be noted that the structure of the communication apparatus 1000 shown in FIG. 10 does not constitute a limitation on the communication apparatus. An actual communication apparatus may include more or fewer components than those shown in the figure, or combine some components, or have different component arrangements.

In addition, for technical effects of the communication apparatus 1000, refer to the technical effects of the random access method in the foregoing method embodiments. Details are not described herein again.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative description, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

All or some of the foregoing embodiments may be implemented by using software, hardware (for example, a circuit), firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification merely describes an association relationship between associated objects and represents that three relationships may exist. For example, A and/or B may represent the following three cases: Only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, "at least one" means one or more, and "a plurality of" means two or more. "At least one of the following items (pieces)" or a similar expression thereof represents any combination of these items, including a single item (piece) or any combination of a plurality of items (pieces). For example, at least one of a, b, or c may indicate: a, b, c, a and b, a and c, b and c, or a, b and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A random access method, applied to a terminal apparatus, wherein the method comprises:

   receiving first indication information, wherein the first indication information indicates a first correspondence between a first service area of a network device and at least one first timing advance, and the first service area is a service area in which the terminal apparatus is located; and
   sending a message 1 based on the at least one first timing advance, wherein the message 1 is used for random access.

2. The method according to claim 1, wherein the at least one first timing advance is correlated with at least one distance, and the at least one distance is a distance between at least one first position in the first service area and the network device.

3. The method according to claim 2, wherein one of the at least one first position is a position that is farthest from the network device and that is in the first service area, a position that is closest to the network device and that is in the first service area, or a central position of the first service area.

4. The method according to any one of claims 1 to 3, wherein the first indication information further indicates a second correspondence between different global navigation satellite system GNSS capabilities and cyclic prefix CP lengths of a random access preamble; and
   the message 1 comprises a random access preamble, and a CP length of the random access preamble in the message 1 is determined based on a GNSS capability of the terminal apparatus and the second correspondence.

5. The method according to claim 4, wherein in the second correspondence, a CP length of a random access preamble corresponding to non-GNSS capable is greater than a CP length of a random access preamble corresponding to GNSS capable.

6. The method according to any one of claims 1 to 5, wherein the method further comprises:

   receiving a message 2, wherein the message 2 indicates a time-frequency resource carrying a message 3;
   sending the message 3 based on the time-frequency resource indicated by the message 2, wherein the message 3 comprises identification information of the terminal apparatus; and

receiving a message 4, wherein the message 4 indicates that contention resolution of the terminal apparatus succeeds.

7. The method according to claim 6, wherein the first indication information further indicates a correspondence between different GNSS capabilities and time-frequency resource sets used for random access; the message 2 comprises second indication information, and the second indication information indicates the time-frequency resource carrying the message 3; and the time-frequency resource carrying the message 3 is a time-frequency resource in a time-frequency resource set that is used for random access and that corresponds to the GNSS capability of the terminal apparatus.

8. The method according to claim 6, wherein receiving the message 2 comprises:
receiving the message 2 after a first moment, wherein a time length between an end moment of sending the message 1 and the first moment is a first time length, and the first time length is twice the first timing advance.

9. The method according to claim 6, wherein receiving the message 4 comprises:
receiving the message 4 after a second moment, wherein a time length between an end moment of sending the message 3 and the second moment is a second time length, and the second time length is twice the first timing advance.

10. The method according to any one of claims 1 to 9, wherein the terminal apparatus is a GNSS capable terminal apparatus, and the network device is a satellite.

11. A random access method, applied to a network device, wherein the method comprises:

sending first indication information, wherein the first indication information indicates a first correspondence between a first service area of the network device and at least one first timing advance, and the first service area is a service area in which a terminal apparatus is located; and
receiving a message 1, wherein the message 1 is sent by the terminal apparatus based on the at least one first timing advance, and the message 1 is used for random access.

12. The method according to claim 11, wherein the at least one first timing advance is correlated with at least one distance, and the at least one distance is a distance between at least one first position in the first service area and the network device.

13. The method according to claim 12, wherein one of the at least one first position is a position that is farthest from the network device and that is in the first service area, a position that is closest to the network device and that is in the first service area, or a central position of the first service area.

14. The method according to any one of claims 11 to 13, wherein the first indication information further indicates a second correspondence between global navigation satellite system GNSS capable/non-GNSS capable and a cyclic prefix CP length of a random access preamble; and
a CP length of a random access preamble in the message 1 is determined based on a GNSS capability of the terminal apparatus and the second correspondence.

15. The method according to claim 14, wherein in the second correspondence, a CP length of a random access preamble corresponding to non-GNSS capable is greater than a CP length of a random access preamble corresponding to GNSS capable.

16. The method according to any one of claims 11 to 13, wherein the receiving the message 1 comprises:
receiving the message 1 in a first time period, wherein a time length of the first time period is correlated with a random access preamble carried in the message 1.

17. The method according to claim 16, wherein the time length of the first time period is positively correlated with a cyclic shift value of a preamble sequence of the random access preamble carried in the message 1.

18. The method according to any one of claims 11 to 17, wherein the method further comprises:

sending a message 2, wherein the message 2 indicates a time-frequency resource carrying a message 3;

receiving the message 3 on the time-frequency resource, wherein the message 3 comprises identification information of the terminal apparatus; and

sending a message 4, wherein the message 4 indicates that contention resolution of the terminal apparatus succeeds.

19. The method according to claim 18, wherein the first indication information further indicates a correspondence between different GNSS capabilities and time-frequency resource sets used for random access; the message 2 comprises second indication information, and the second indication information indicates the time-frequency resource carrying the message 3; and the time-frequency resource carrying the message 3 is a time-frequency resource in a time-frequency resource set that is used for random access and that corresponds to the GNSS capability of the terminal apparatus.

20. The method according to any one of claims 11 to 19, wherein the terminal apparatus is a GNSS capable terminal apparatus, and the network device is a satellite.

21. A communication apparatus, wherein the communication apparatus is configured to perform the method according to any one of claims 1 to 10 or any one of claims 11 to 20.

22. A communication apparatus, wherein the communication apparatus comprises a module configured to perform a function according to any one of claims 1 to 10 or any one of claims 11 to 20.

23. A communication apparatus, wherein the communication apparatus comprises a processor, wherein the processor is configured to perform the method according to any one of claims 1 to 10 or any one of claims 11 to 20.

24. A communication apparatus, comprising a processor, wherein the processor is configured to execute a computer program, to enable the communication apparatus to perform the method according to any one of claims 1 to 10 or any one of claims 11 to 20.

25. A communication apparatus, comprising a processor and an interface circuit, wherein

the interface circuit is configured to: receive code instructions, and transmit the code instructions to the processor; and

the processor is configured to run the code instructions to perform the method according to any one of claims 1 to 10 or any one of claims 11 to 20.

26. A communication apparatus, wherein the communication apparatus comprises a processor and a transceiver, wherein the transceiver is configured to exchange information between the communication apparatus and another communication apparatus, and the processor executes program instructions, to perform the method according to any one of claims 1 to 10 or any one of claims 11 to 20.

27. A computer-readable storage medium, wherein the computer-readable storage medium comprises a computer program or instructions; and when the computer program or the instructions are run on a computer, the computer is enabled to perform the method according to any one of claims 1 to 10 or any one of claims 11 to 20.

28. A computer program product, wherein the computer program product comprises a computer program or instructions, and when the computer program or the instructions are run on a computer, the computer is enabled to perform the method according to any one of claims 1 to 10 or any one of claims 11 to 20.

| Terminal apparatus | First network device | Second network device |
|---|---|---|

S101: The terminal apparatus performs cell search and selects a cell

S102: The terminal apparatus performs random access to the selected cell

S103: The terminal apparatus establishes a radio resource control connection to the first network device

S104: The terminal apparatus establishes an initial context

S105: The terminal apparatus establishes a protocol data unit session connection

FIG. 1

| Terminal apparatus | First network device |
|---|---|

S201: Message 1

S202: Message 2

S203: Message 3

S204: Message 4

FIG. 2

FIG. 3

Network device 401
(reference point)

Service
link

Service
link

Service
link

Feeder link

Terrestrial
gateway
403

Terminal
apparatus
402a

Terminal
apparatus 402b

Terminal
apparatus 402c

First service area

FIG. 4

Terminal apparatus | Network device

S501: First indication information, indicating a first correspondence between a first service area of the network device and at least one first timing advance

S502: Send a message 1 based on the at least one first timing advance

S503: Message 2

S504: Message 3

S505: Message 4

FIG. 5

Terminal apparatus | Network device

S601: First indication information, indicating a first correspondence between a first service area of the network device and at least one first timing advance

S602: Send a message 1 based on the at least one first timing advance

S603: Message 2

S604: Message 3

S605: Message 4

FIG. 6

Terminal apparatus | Network device

S701: First indication information, indicating a first correspondence between a first service area of the network device and at least one first timing advance

S702: Send a message 1 based on the at least one first timing advance, where a CP length of a random access preamble in the message 1 is determined based on a second relationship

S703: Message 2

S704: Message 3

S705: Message 4

FIG. 7

Terminal apparatus | Network device

S801: First indication information, indicating a first correspondence between a first service area of the network device and at least one first timing advance

S802: The terminal sends a message 1 based on the first timing advance, and the network device receives the message 1 in a first time period

S803: Message 2

S804: Message 3

S805: Message 4

FIG. 8

Communication apparatus 900

901

Processing module

Transceiver module

902

FIG. 9

Communication apparatus 1000

1001

Processor

CPU 0

CPU 1

1004

Processor

CPU 0

CPU 1

1002

Memory

1003

Transceiver

FIG. 10

## INTERNATIONAL SEARCH REPORT

International application No.

**PCT/CN2024/113146**

### A. CLASSIFICATION OF SUBJECT MATTER

H04W 74/08(2024.01)i; H04W 56/00(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 随机接入, RA, 卫星, 非地面, NTN, 全球导航卫星系统, GNSS, 定位, 提前量, 定时提前, 定时偏移, TA, SSB, 物理广播信道块, 对应, 区域, random access, non-terrestrial network, global navigation satellite system, timing advance, synchronization signal and physical broadcast channel block, corresponding, area

### C. DOCUMENTS CONSIDERED TO BE RELEVANT

| Category* | Citation of document, with indication, where appropriate, of the relevant passages | Relevant to claim No. |
|---|---|---|
| X | WO 2021128309 A1 (GUANGDONG OPPO MOBILE COMMUNICATIONS CO., LTD.) 01 July 2021 (2021-07-01) <br> description, pages 7-12 and 15 | 1-28 |
| A | CN 111565459 A (HUAWEI TECHNOLOGIES CO., LTD.) 21 August 2020 (2020-08-21) <br> entire document | 1-28 |
| A | CN 113518417 A (HUAWEI TECHNOLOGIES CO., LTD.) 19 October 2021 (2021-10-19) <br> entire document | 1-28 |
| A | CN 116261909 A (GUANGDONG OPPO MOBILE COMMUNICATIONS CO., LTD.) 13 June 2023 (2023-06-13) <br> entire document | 1-28 |
| A | WO 2020156458 A1 (TELEFONAKTIEBOLAGET LM ERICSSON (PUBL) et al.) 06 August 2020 (2020-08-06) <br> entire document | 1-28 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **04 November 2024** | **11 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/113146**

| Patent document cited in search report | | | Publication date (day/month/year) | Patent family member(s) | | | Publication date (day/month/year) |
|---|---|---|---|---|---|---|---|
| WO | 2021128309 | A1 | 01 July 2021 | US | 2022330347 | A1 | 13 October 2022 |
| | | | | EP | 4024971 | A1 | 06 July 2022 |
| | | | | CN | 114868433 | A | 05 August 2022 |
| CN | 111565459 | A | 21 August 2020 | WO | 2020164581 | A1 | 20 August 2020 |
| CN | 113518417 | A | 19 October 2021 | WO | 2021203922 | A1 | 14 October 2021 |
| | | | | EP | 4102899 | A1 | 14 December 2022 |
| | | | | US | 2023013195 | A1 | 19 January 2023 |
| CN | 116261909 | A | 13 June 2023 | WO | 2022120842 | A1 | 16 June 2022 |
| WO | 2020156458 | A1 | 06 August 2020 | MX | 2021007961 | A | 11 August 2021 |
| | | | | US | 2024334499 | A1 | 03 October 2024 |
| | | | | EP | 3918870 | A1 | 08 December 2021 |
| | | | | US | 2022104278 | A1 | 31 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311142426